# EUROPEAN PATENT APPLICATION

(11) **EP 1 422 422 A2**
(43) Date of publication of application: **26.05.2004**
(21) Application number: 03256491.6
(22) Date of filing: 15.10.2003
(51) Int. Cl.: F03D 3/00

(54) **Darrieus windmill**

(30) Priority: 25.11.2002 JP 2002340577
(71) Applicant: Satsuki Seisakusho Co., Ltd., Chiba, 284-0012 (JP)
(72) Inventor: Takahashi, Kentaro, Yotsukaido-shi Chiba 284-0001 (JP)
(74) Representative: Billington, Lawrence Emlyn

(57) **Abstract**

A Darius windmill comprises a rotor having a plurality of blades (8) around a vertical rotating shaft (6). Each of the blades (8) is in the form of a bag of which the rear end portion with respect to the rotating direction thereof is cut to form an opening (16). Each blade (8) has a fixed uniform cross section in a direction parallel to the vertical rotating shaft (6).

## Description

The present invention relates to a windmill adapted for wind power generation.

Conventional windmills include drag-type windmills that utilize wind power to push blades and lift-type windmills that utilize the force of the wind to lift blades as the wind hits the blades.

Since drag-type windmills cannot move faster than the wind, their rotational frequency is inevitably low. On the other hand, lift-type windmills, such as propeller windmills and Darius windmills, can enjoy high rotational frequency, though their rotary power is low.

The power characteristic that determines the rotational frequency with which much wind energy can be fetched as rotational energy varies depending on the types of the windmills.

Drag-type windmills that enjoy high rotary power with lower rotational frequency, such as paddle windmills, Savonius windmills, and multi-blade windmills, can efficiently fetch wind energy during low-speed operation. On the other hand, lift-type windmills that enjoy high rotational frequency, such as propeller windmills and Darius windmills, can fulfill their performance best during high-speed operation.

It is to be desired, therefore, that energy should be also efficiently fetched during low-speed operation by utilizing both drag and lift that are generated by the wind.

A windmill that utilizes both drag and lift of the wind is described in a Japanese Patent Publication (unexamined), JP 2000-199472 A. In this windmill, three displacement-type blades of which the upper and lower outside ends are shifted at peripheral angles of 90° are arranged with phase differences of 120°. However, these displacement-type blades have a complicated construction and a wide area, so that their rotational frequency cannot be increased with ease. Thus, slipstreams that are produced after the passage of the blades are liable to disturbance, so that a loss of energy is substantial.

A vertical-shaft windmill that uses wing-shaped blades is described in a Japanese Utility Model Publication (examined), JP 59-36705 Y2. In this windmill, an auxiliary blade for starting is swingably attached to the inside of each blade, and an auxiliary blade for braking is swingably attached to the outside of each blade. The auxiliary blade for starting has its rotating shaft located on the front side of the blade, with respect to the rotating direction, and is provided with a spring that continually urges the blade to open. On the other hand, the auxiliary blade for braking has its rotating shaft located on the rear side of the blade and is provided with a spring that continually urges the blade to open.

A vertical-shaft windmill is an improved version of a straight-blade Darius windmill (gyro-type windmill). It is intended to eliminate drawbacks of the Darius windmill such that the operation cannot be easily started from the stopped state and that heavy braking is required despite the high output for the high-speed operation.

However, the separate movable auxiliary blades are attached individually to the outside and inside of each blade, and each auxiliary blade is urged by means of a spring. Therefore, the construction of the blades is very complicated, and the auxiliary blades easily break when they are hit by a strong wind.

An embodiment of the present invention may provide a Darius windmill of simple construction, which is not susceptible to wind direction and can efficiently fetch wind energy without regard to the speed of rotation, high or low, easily start operation from a stopped state, and rotate at high speed.

A Darius windmill according to the present invention comprises a rotor having a plurality of blades around an, e.g. vertical, rotary shaft. Each of the blades is in the form of a bag of which the rear end portion with respect to the rotating direction thereof is cut to form an opening, and has a fixed uniform cross section parallel to the rotary shaft.

The windmill may be of a vertical-shaft type, which is less susceptible to the wind direction. If the wind flows from the opening side of any of the blades, it gets into the blade through the opening. The resulting air current applies drag to the inner wall surface of the blade. Since this drag is much larger than drag that acts on the outer wall surface of the front end portion of the blade, the blade advances with its opening facing backward, whereupon the rotor rotes.

When the rotor rotates, the resulting wake lowers the wind speed on one side of the rotor and increases the wind speed on the other side, whereby the rotation of the rotor is promoted.

A guide plate may be located projecting in the rotating direction from the opening of the blade. The guide plate serves smoothly to narrow air currents along the outer and inner faces of the blade without disturbance, thereby guiding them rearward, so that a loss of energy is lessened.

### BRIEF DESCRIPTION OF THE DRAWINGS

FIG. 1 is a plan view of a Darius windmill according to one embodiment of the present invention;
FIG. 2 is a side view of the Darius windmill of FIG. 1;
FIG. 3 is a plan view showing a first example of a blade used in the Darius windmill of FIG. 1;
FIG. 4 is a longitudinal sectional view of the blade of FIG. 3;
FIG. 5 is a plan view showing a second example of the blade used in the Darius windmill of FIG. 1; and
FIG. 6 is a plan view showing a third example of the blade used in the Darius windmill of FIG. 1.

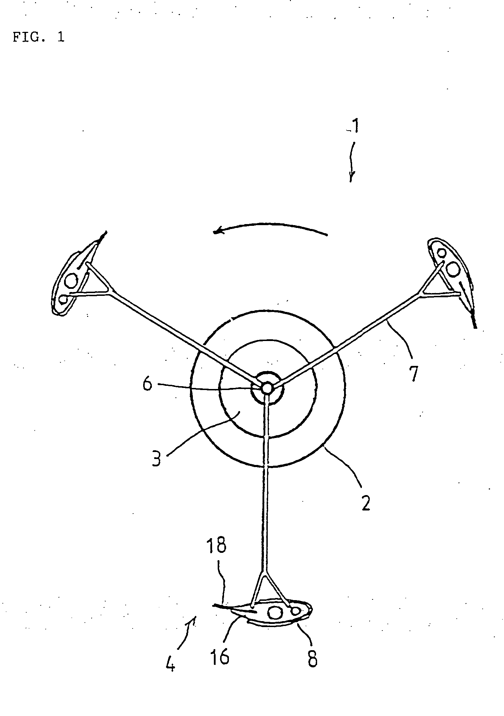

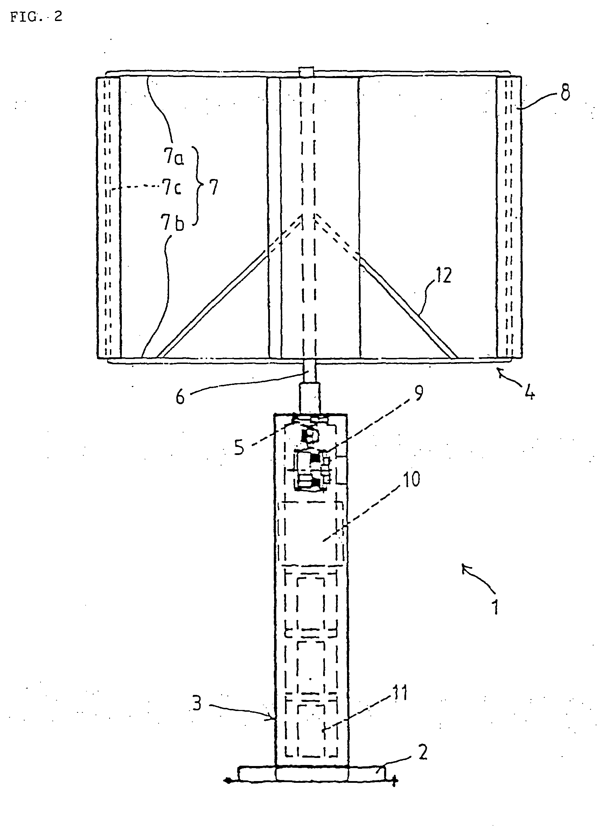

As shown in FIGS. 1 and 2, a Darius windmill 1 according to one embodiment of the present invention is a vertical-blade Darius windmill (gyro-type windmill), which comprises a tower 3 standing on the upper surface of a base 2 and a rotor 4 set on the upper end of the tower 3. The base 2 is firmly fixed to a foundation such as the ground by means of anchor bolts.

The rotor 4 is composed of a vertical rotating shaft 6, three support shafts 7, and blades 8. The rotating shaft 6 is set up for rotation on the upper end of the tower 3 by means of a bearing 5. The support shafts 7 project in a radial direction from the shaft 6 in a manner such that they are arranged at angular intervals of 120° in the circumferential direction. The blades 8 are set individually on the respective distal ends of the shafts 7 to extend vertically.

The tower 3 has therein a generator 10 that is connected to the lower end of the vertical rotating shaft 6 by means of speed increasing gears 9. As the rotor 4 rotates, the batteries 11 are charged with electricity that is generated by the generator 10.

Naturally, electricity that is generated by rotating the rotor 4 can be also fed directly into a power network, and the rotary power of the rotor 4 can be utilized for pumped storage. Since a system for utilizing the rotary power of the rotor 4 is generally known, a detailed description of the system is omitted.

Each of the support shafts 7 that project in a radial direction from the vertical rotating shaft 6 is composed of an upper horizontal portion 7a, a lower horizontal portion 7b, and a pair of vertical portions 7c. The upper horizontal portion 7a projects horizontally from the upper part of the shaft 6, and its distal end is forked. The lower horizontal portion 7b projects horizontally from the lower part of the shaft 6, and its distal end is forked. The vertical portions 7c connect the respective forked distal ends of the upper and lower horizontal portions 7a and 7b.

Further, reinforcing shafts 12 are stretched diagonally between the lower horizontal portion 7b and the vertical rotating shaft 6. The vertical portions 7c penetrate each blade 8 at two portions on the front and rear side with respect to the rotating direction.

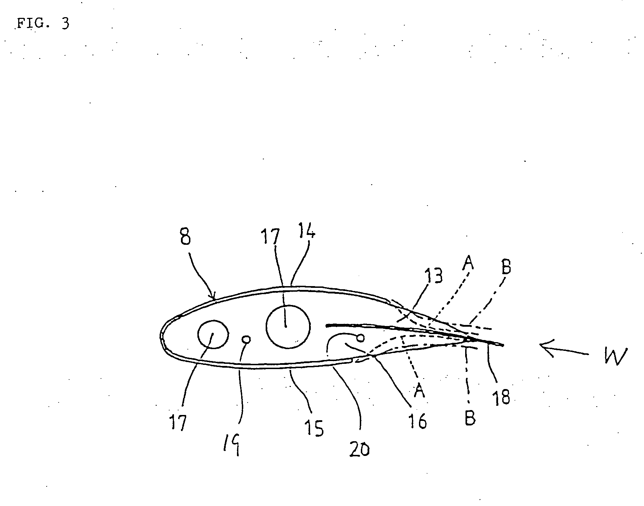

Each blade 8 is a bag-shaped structure, of which the rear end with respect to the rotating direction is cut to form an opening. The blade 8 is wing-shaped, as shown in the top view of FIG. 3. The horizontal cross section of the blade 8 has a uniform shape (i.e., the same shape as the one shown in FIG. 3) along the vertical rotating shaft 6 that supports it, i.e. in a direction substantially parallel to the rotary axis of the rotating shaft 6.

A side face (inner face 15) of each blade 8 that faces the vertical rotating shaft 6 is formed convex swelling toward the shaft 6 (or inward in a radial direction), while a side face (outer face 14) that is opposed to the inner face 15 is formed convex swelling outward in the radial direction. In the wing-shaped blade 8 having its internal space defined by the curved outer face 14 and the opposite inner face 15, as shown in FIG. 3, the length of the outer face 14 in the rotating direction is greater than that of the inner face 15.

Inside the blade 8, moreover, a plurality of spacers 13, each in the form of a flat plate having substantially the same shape (shape of a wing) as each blade 8, are arranged at equal spaces in the vertical direction. A part of each spacer 13 projects outward from the blade 8 through an opening 16. One or more holes 17 are formed in the spacer 13 to reduce its weight.

The spacers 13 are attached to the vertical portions 7c of the support shafts 7. In FIG. 3, numerals 19 and 20 individually denote holes in the spacer 13 through which the paired vertical portions 7c pass.

A guide plate 18 bites the rear parts of the vertically arranged spacers 13 with its surface perpendicular to the surface of each spacer 13. The length of the plate 18 is substantially equal to the vertical length of each blade 8. In consequence, the rear part of the internal space of the blade 8 is diametrically halved in- and outside by the plate 18. The guide plate 18 extends further rearward from the rear end of each spacer 13 in the rotating direction.

If a wind blows forward from the back of one of the blades 8, as indicated by arrow W of FIG. 3, air gets into the internal space of the blade 8 through the opening 16. Since the air confined in the internal space of the blade 8 cannot get out forward, the blade 8 moves forward as the internal current of air pushes its inner wall surface. While the blade 8 is receiving the wind in the direction of arrow W of FIG. 3, the wind acts as an opposite drag on the two other blades 8. However, the drag that oppositely acts on the two other blades 8 is much smaller than the drag that acts on the one blade 8 in the forward direction. In consequence, the blade 8 is moved forward by the drag of the wind, whereupon the rotor 4 starts to rotate in the counterclockwise direction of FIG. 1.

Once the rotor 4 starts to rotate, urged by the drag of the wind, the wind speeds on the left- and right-hand sides of the rotor 4 are relatively changed by a wake that is produced as the rotor 4 rotates. Thus, the rotor 4 can rotate at high speed.

If the wind speeds are low, the outer and inner portions of the air current behind the opening 16 of the blade 8 approach each other with the guide plate 18 between them, as indicated by broken-line arrow A of FIG. 3. If the wind speeds become higher, on the other hand, the outer and inner portions of the air current behind the opening 16 of the blade 8 separate from each other with the guide plate 18 between them, as indicated by dashed-line arrow B.

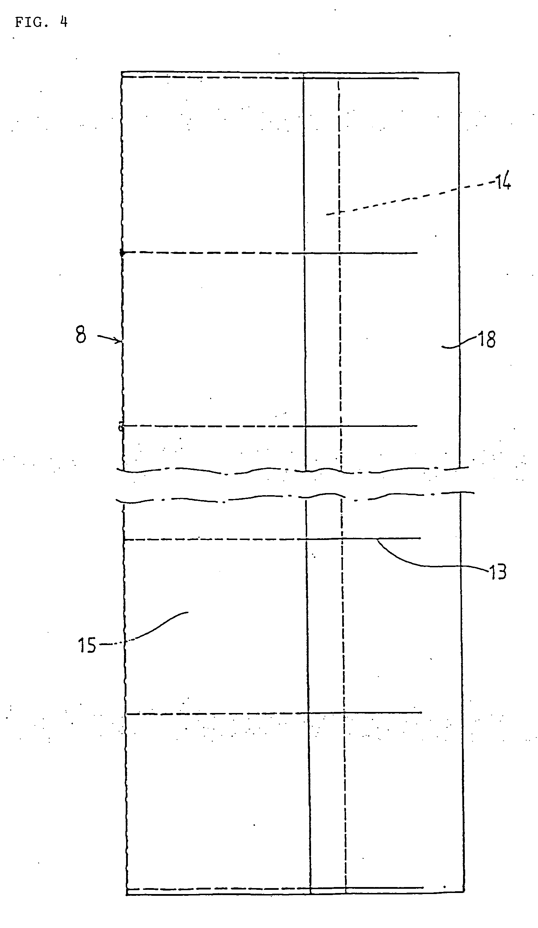

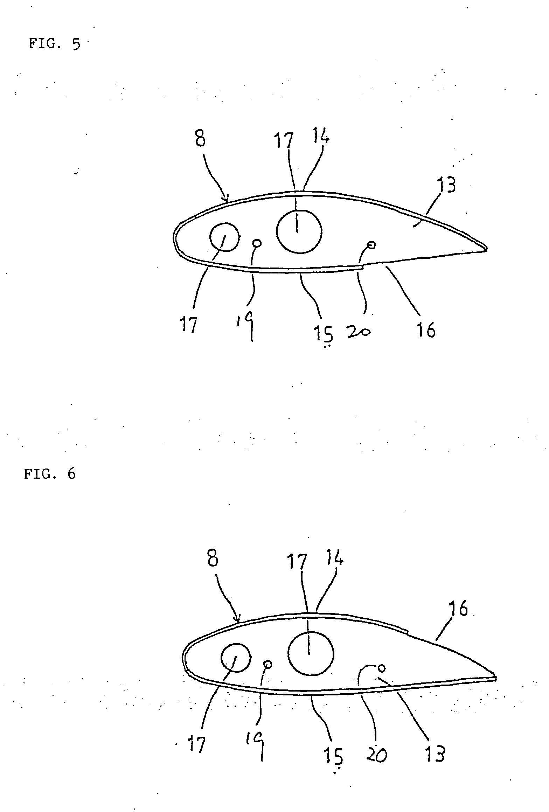

FIG. 5 shows another example that replaces the blade shown in FIGS. 3 and 4.

This blade 8 is not provided with the guide plate 18, and its outer face 14 extends long enough to reach the rear end of the spacer 13. Thus, the opening 16 is formed inside the rear end portion of the blade 8.

This example substantially shares other configurations with the example of FIG. 3. Therefore, like numerals are used to designate like portions of these examples, and a detailed description of those portions is omitted.

FIG. 6 shows still another example that replaces the blades shown in FIGS. 4 and 5.

The inner face 15 of this blade 8 extends long enough to reach the rear end of the spacer 13 so that the opening 16 is formed outside the rear end portion of the blade 8.

This example substantially shares other configurations with the example of FIG. 5.

The sectional shape of each blade 8 is not limited to the ones shown in FIGS. 3, 5 and 6. The inner face 15 may be concaved diametrically inward only if the blade 8 is in the form of a wing that has an opening in its rear end portion.

The blades 8 may be suitably changed in number. If too many blades are used, however, the rotational frequency of the rotor 4 cannot be increased with ease. If the blades are two or less in number, on the other hand, the drag of the wind cannot be utilized securely. Preferably, therefore, the blades should be three or four in number.

As in the case of a curved-blade Darius windmill, moreover, each blade 8 may be curved so that its upper and lower end portions are brought close to the vertical rotating shaft 6.

According to the present embodiment, as described above, the drag of the wind can be utilized relatively easily to start the rotation of the rotor from a stopped state and to rotate the rotor at a speed higher than the wind speed. Thus, energy can be efficiently fetched from the wind without regard to the speed of rotation, high or low, so that high-output rotation can be ensured.

Further, each blade has a simple construction and a fixed cross section that is uniform throughout its length without a movable part. Thus, the blades are not easily breakable and are easy to manufacture at low cost.

If the guide plate is projected in the rotating direction from the opening of each blade, the air current behind the blade can be restrained from becoming turbulent and be narrowed, so that a loss of energy can be reduced.

## Claims

1. A Darius windmill comprising a rotor having a plurality of blades around a rotary shaft, wherein:
each said blade is in the form of a bag of which the rear end portion with respect to the rotating direction thereof is cut to form an opening and each said blade has a fixed uniform cross section in a direction substantially parallel to the rotary axis of the rotating shaft.

2. The Darius windmill according to claim 1, which further comprises a guide plate projecting in the rotating direction from the opening of the blade.

3. The Darius windmill according to claim 1 or 2, wherein the rotary shaft is vertical.
